# FASCICULE DE BREVET EUROPEEN

(11) **EP 0 674 295 B1**
(45) Date de publication et mention de la délivrance du brevet: **26.07.2000**
(21) Numéro de dépôt: 95400600.3
(22) Date de dépôt: 17.03.1995
(51) Int. Cl.: G07C 9/00

(54) **Système de vérification d'identité**
System zur Prüfung der Identität
System for verifying the identity

(30) Priorité: 23.03.1994 FR 9403433
(43) Date de publication de la demande: 27.09.1995
(73) Titulaire: GEMPLUS CARD INTERNATIONAL, 13420 Gémenos (FR)
(72) Inventeur: Valadier, Jean-Louis, F-75116 Paris (FR)

(56) Documents cités:
- EP-A- 0 247 788
- EP-A- 0 334 616
- WO-A-93/11511
- GB-A- 2 173 970
- US-A- 3 569 619

## Description

L'invention concerne les systèmes de contrôle et d'authentification de personnes, et plus particulièrement ceux qui reposent sur le stockage de données d'identification dans des cartes. Le titulaire porte une carte sur lui et peut présenter cette carte à un poste de contrôle (poste de police, poste frontalier, etc.) lorsqu'il doit subir une vérification d'identité.

La vérification d'identité consiste à s'assurer que les informations contenues dans la carte sont normales et que la personne qui présente la carte est bien celle qui est titulaire de la carte. Classiquement, c'est une carte d'identité ou un passeport qui sert à ces contrôles. Le numéro de la carte et les autres indications portées sur la carte peuvent être contrôlés. De plus, la photographie du titulaire ainsi que d'autres signes distinctifs (couleur des yeux, des cheveux, taille, etc.) sont indiqués sur la carte; on peut vérifier par simple inspection visuelle que la personne qui présente la carte est bien le titulaire.

Des falsifications sont cependant possibles (réalisations de faux passeports ayant toutes les apparences d'un vrai passeport et portant la photographie d'un fraudeur).

On a bien sûr essayé d'utiliser des procédés modernes pour améliorer la sécurité contre les fraudes.

Par exemple, un procédé récemment adopté consiste à imprimer électroniquement une photo (en fac-similé) sur la carte, d'une manière telle qu'on ne puisse pas détacher cette photo sans détruire la carte. Dans la plupart des cas, la couche superficielle de la carte est constituée d'un film portant un hologramme ce qui empêche son enlèvement et donc la falsification de la photographie ou des indications graphiques portées par la carte.

On a essayé également d'inscrire des informations d'identité non pas de manière directement lisible sur du papier, mais de manière électronique, par exemple sur une piste magnétique de la carte, ou dans la mémoire d'une carte à puce.

Une telle solution est par exemple mise en oeuvre dans le document EP-A-0 247 788.

Dans le cas d'une carte à puce, la sécurité des informations stockées sous forme électronique peut être assez bien assurée, surtout si c'est une carte à microprocesseur comportant des algorithmes de sécurité. La photographie du titulaire reste cependant nécessaire pour vérifier que celui qui présente la carte est bien le titulaire et pour vérifier la cohérence entre la photo de la puce et celle de la carte. La photographie peut être stockée dans la mémoire de la carte à puce si on utilise des algorithmes de compression d'image appropriés. Ce stockage d'image utilise cependant une quantité de mémoire importante, ce qui rend la carte chère.

Le brevet US 3 569 619 décrit un système de contrôle selon le préambule de la revendication 1. Dans ce système, il est nécessaire d'avoir une zone mémoire dans la station de contrôle d'une certaine capacité pour le stockage de l'ensemble des caractères morphologiques.

D'autres informations biométriques peuvent être utilisées pour l'authentification d'un porteur : empreintes digitales, fond d'oeil, etc. Le même problème que pour la photographie se pose en général : il faut procéder à une comparaison des données biométriques de l'individu qui se présente et de celles qui sont portées par la carte. Or ces données doivent être portées de manière visible sur la carte pour permettre de procéder à cette comparaison. Des falsifications sont possibles. Et si on les stocke dans une carte à puce pour profiter des avantages de sécurité des cartes à puces, l'espace de mémoire nécessaire est important donc coûteux.

La présente invention a pour but de proposer un système de sécurité qui repose sur l'utilisation de cartes de stockage de données et qui évite les défauts des systèmes existants.

On propose selon l'invention de stocker dans la carte à puce un petit nombre de codes très simples (ordre de grandeur : quelques octets à quelques dizaines d'octets) représentant des données biométriques codifiées, caractéristiques du titulaire de la carte, les stations de contrôle étant équipées de moyens de lecture de ces codes et de logiciels permettant de fournir sur un écran d'affichage soit une indication écrite explicite soit une représentation visuelle des données biométriques codifiées. Les données codifiées sont de préférence des caractères morphologiques du visage du titulaire.

Dans la version la plus simple, le logiciel présent à la station de contrôle comprend essentiellement une table de conversion des codes stockés en expressions littérales explicites.

Dans une version particulièrement originale, qui est plus sophistiquée et qui peut être très intéressante, le logiciel présent à la station de lecture est apte à lire les codes stockés dans la carte et à établir une représentation visuelle schématique d'un visage théorique combinant les différents caractères morphologiques correspondant aux différents codes lus dans la carte.

En d'autres mots, le système de contrôle selon l'invention est tel que défini à la revendication 1.

La représentation sera de préférence une représentation visuelle d'un visage schématisé ayant les particularités biométriques correspondant à chacun des codes simples lus dans la carte.

Le système est particulièrement adapté au contrôle de titulaires à partir de données biométriques classiques concernant le visage et la morphologie générale de l'individu, mais il est transposable aussi au cas où les données biométriques sont des empreintes digitales (codées par des vecteurs) ou des fonds d'oeil (également codées par des vecteurs).

D'autres caractéristiques et avantages de l'invention apparaîtront à la lecture de la description détaillée qui suit et qui est faite en référence aux dessins annexés dans lesquels :
- la figure 1 représente schématiquement le système de contrôle selon l'invention;
- la figure 2 représente schématiquement l'organisation générale des moyens d'affichage d'une image de visage;
- la figure 3 représente un écran d'affichage d'une image schématique obtenue selon l'invention.

On va décrire l'invention à propos du cas qui est le plus intéressant et qui, exprimé sous forme générale, est un système qui comprend au moins une carte de stockage de données destinée à être conservée par un titulaire, et une station de contrôle comportant un lecteur de carte, la station de contrôle comportant des moyens pour établir et afficher une image schématique d'une partie du corps du titulaire de la carte à partir d'une série limitée d'informations stockées dans la carte et représentant sous forme codifiée une série correspondante de caractères morphologiques significatifs de la partie de corps considérée du titulaire.

La partie de corps considérée ici sera le visage car c'est le visage qu'il est particulièrement intéressant de reproduire sur un écran au moment d'un contrôle d'identité. Mais on comprendra que l'invention n'est pas limitée à ce cas, étant donné que les procédés de contrôle peuvent reposer sur d'autres morphologies telles que les empreintes digitales ou les fonds d'oeil.

Le principe de l'invention est d'abord le stockage d'une très petite quantité d'informations codées représentant des caractères morphologiques significatifs de l'individu, car une information sur l'existence de tel ou tel caractère morphologique occupe beaucoup moins de place en mémoire qu'une image réaliste de ce caractère, ou même que la mention littérale explicite de ce caractère. Or la carte est vite coûteuse si elle doit incorporer une quantité de mémoire importante.

En second lieu, l'idée de l'invention est d'afficher sur un écran une image schématique reconstituée à partir de ces informations codifiées. L'expérience des "portraits-robots" montre en effet qu'une image schématique reconstituée à partir d'informations sur des types généraux de morphologie possède de très fortes ressemblances avec les images réelles des individus à qui l'on attribue ces types morphologiques.

Par conséquent, on ne se contentera pas d'afficher sur un écran une donnée écrite telle que "oreilles décollées", mais on tracera un portrait schématique montrant un visage à oreilles décollées. Le contrôle visuel en sera grandement facilité et peut aller jusqu'à rendre superflue la présence d'une photographie sur la carte. Si une photographie reste présente, l'affichage de l'image schématique permettra en tous cas de détecter une divergence entre la photographie représentée et les informations stockées.

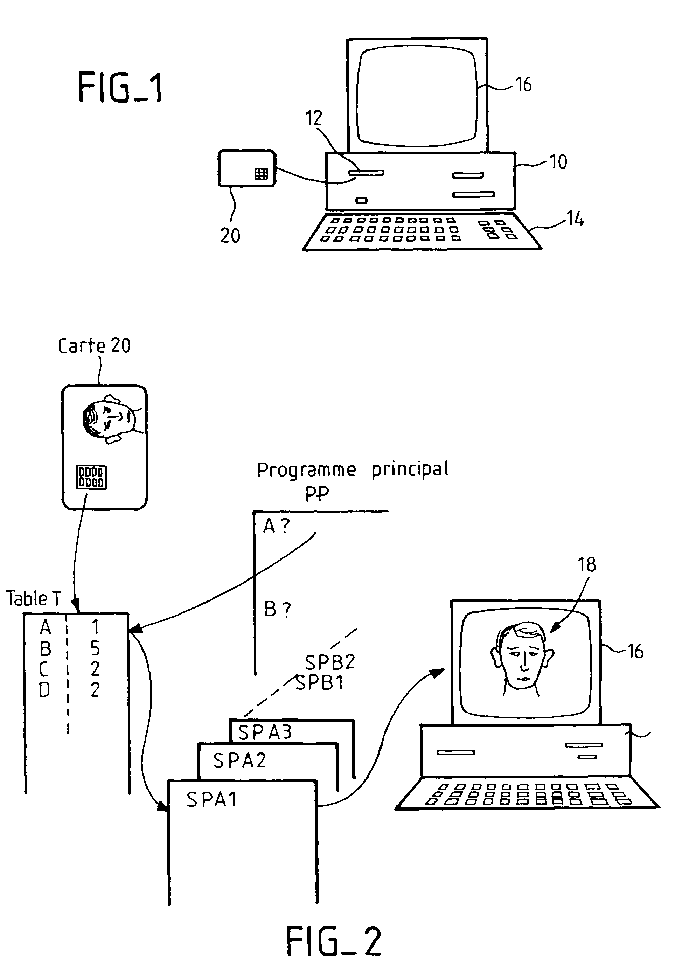

La figure 1 représente l'ensemble du système selon l'invention.

La station de contrôle comportera essentiellement un microordinateur personnel 10, équipé d'un lecteur de carte à puce 12, d'un clavier 14 et d'un écran d'affichage 16. Le microordinateur est équipé par ailleurs des moyens nécessaires (disque dur, disquettes souples, etc.) permettant de stocker et de faire exécuter des logiciels nécessaires à la mise en oeuvre de l'invention.

Le système est destiné à contrôler des personnes qui sont titulaires d'une carte à puce 20. La carte 20 peut contenir diverses informations, et selon l'invention elle comporte aussi la série de codes simples définissant la morphologie du visage du titulaire.

La morphologie peut être définie par plusieurs éléments morphologiques (par exemple : forme du visage, forme des yeux, couleur des yeux, etc.) et à chacun de ces éléments on peut attribuer une valeur codifiée parmi plusieurs valeurs représentant des possibilités différentes. Par exemple pour l'élément morphologique A qui peut être la "forme du visage" on peut prévoir les valeurs 1 ("rond"), ou 2 ("ovale"), ou 3 ("carré"), etc. De même pour les autres éléments morphologiques tels que B : "forme des yeux", ou C : "forme des oreilles", etc.

La carte peut stocker les codes (A, B, C, ...) représentant les éléments morphologiques avec des codes (1, 2, 3, ...) représentant leur valeur. Par exemple, la carte contient une série de paires de codes; le premier code d'une paire représente un élément morphologique et le deuxième code de la paire représente la valeur attribuée à ce code pour l'individu considéré.

Mais on peut envisager aussi, pour limiter l'espace mémoire consommé dans la carte, que seules les valeurs sont stockées, et non les codes d'éléments morphologiques. La position d'une valeur dans une série de valeurs successives représente l'élément morphologique auquel est attribuée cette valeur. Les différentes positions de valeurs sont prédéterminées et correspondent aux différents éléments morphologiques qui doivent être stockés dans un ordre bien défini. La station de contrôle connaît l'ordre des valeurs enregistrées dans la carte et peut reconstituer une table d'éléments morphologiques en utilisant leurs valeurs codifiées lues dans la carte à des positions prédéterminées d'une mémoire.

La figure 2 représente l'organisation générale des moyens (essentiellement logiciels) qui permettent d'utiliser les valeurs codées lues dans la carte.

Le logiciel de la station de contrôle est d'abord apte à établir une table T de caractères morphologiques à valeurs codifiées.

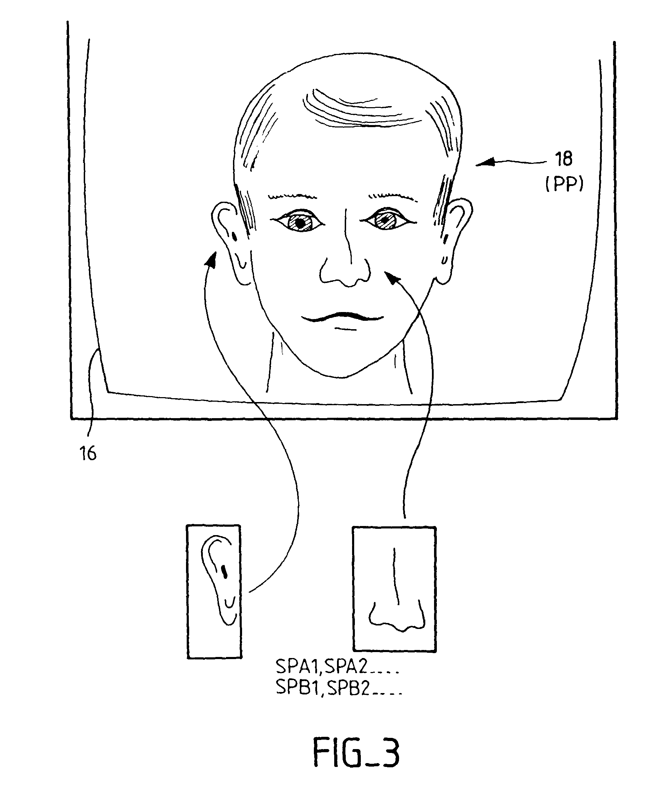

A chaque valeur (1, 2, 3 ...) d'un élément codifié (A, B, C .....) est associé un sous-programme de dessin d'une forme schématique représentant cet élément (SPA1, SPA2, ..., SPB1, SPB2 ....). Les sous-programmes de dessin permettent d'établir une partie de l'image du visage en vue de son affichage sur l'écran 16. Le logiciel de contrôle (programme principal PP) associe les éléments de dessins les uns avec les autres pour aboutir à une image globale 18 (figure 2 et 3) du visage, schématisée en ce sens qu'elle résulte de caractères codifiés, mais qui peut être d'apparence réaliste (si les sous-programmes de dessin font eux-mêmes appel à des images préenregistrées suffisamment réalistes).

Le programme principal PP de la station de contrôle va donc d'abord lire dans la carte pour établir une table de valeurs morphologiques codifiées, puis il recherche pour chaque valeur codifiée un sous-programme de dessin correspondant et il associe les différents sous-programmes entre eux pour afficher une image globale de visage. L'image réalisée 18 possède les caractères morphologiques correspondant à ceux qu'on a inscrit dans la carte.

Les logiciels de dessin existant aujourd'hui peuvent facilement partir d'images schématiques ou réalistes, agrandir, réduire, déplacer et faire tourner ces images, de sorte qu'on peut associer plusieurs éléments d'apparence réaliste pour aboutir à une image complexe représentant de manière cohérente un visage.

A titre d'exemple, on peut prévoir que le sous-programme de dessin de la forme du visage comprend non seulement de quoi réaliser sur l'écran une image d'apparence schématique (plus ou moins réaliste) ayant la forme générale correspondant à la valeur attribuée (ronde, ovale, poire, etc.) mais aussi des points de repère pour placer les autres éléments morphologiques du visage : repère d'une position de nez, d'yeux, d'oreilles, de la bouche, etc.

Les autres sous-programmes comportent eux-aussi à la fois les éléments nécessaires à un dessin schématique plus ou moins réaliste d'une forme morphologique, mais aussi les repères qui peuvent permettre l'association aux autres éléments. Par exemple, un sous-programme correspondant à la valeur "oreilles décollées" attribuée à l'élément "forme des oreilles" comporte d'une part le dessin des oreilles décollées et d'autre part des repères de position dans ce dessin, permettant de venir placer automatiquement ce dessin sur le dessin "forme du visage" en faisant coïncider les repères du dessin d'oreilles avec les repères prévus sur le dessin de visage.

Il est donc facile de représenter une image complète du visage, intégrant les différentes caractéristiques morphologiques codifiées lues dans la carte.

La figure 3 représente schématiquement la manière de réaliser sur l'écran 16 une image globale 18 à partir d'éléments de dessins établis par les sous-programmes SPA1, etc. La synthèse globale étant faite par le programme principal PP.

Pour certains caractères morphologiques, la représentation imagée consistera en une modification du dessin déjà affiché par un caractère précédent. Par exemple, le caractère "yeux en amande" peut avoir donné lieu à un premier sous-programme de dessin, et le caractère "yeux rapprochés" peut exécuter un déplacement des éléments de dessin correspondant aux yeux. De même, la valeur "yeux bleus" attribuée à l'élément "couleur des yeux" impliquera un remplissage coloré (sur un écran couleur) ou légèrement grisé (écran noir et blanc) de l'iris du dessin réalisé par d'autre sous-programmes.

Bien entendu, la sophistication plus ou moins grande de la représentation schématique du visage du titulaire de la carte dépendra des capacités de traitement logiciel de la station de contrôle et du coût accepté pour le logiciel de traitement installé.

Il peut être souhaitable d'éviter que la représentation schématique du visage soit de type trop réaliste. Un portrait de type portrait-robot, ayant nettement les apparences d'un dessin manuel peut être préférable à un portrait ayant trop les apparences d'une photographie réaliste. Mais le choix entre ces deux types de représentation dépend des applications envisagées.

A titre indicatif, on donne ci-dessous divers éléments morphologiques qui peuvent être utilisés pour remplir la carte à puce :
A : forme du visage
B : forme des yeux
C : forme des oreilles
D : forme du nez
E : forme des cheveux
F : forme des sourcils
G : forme du front
H : forme de la bouche
I : forme du menton
J : couleur du visage
K : couleur des yeux
L : couleur des cheveux
M : lunettes
N : moustache
O : barbe

Chacun de ces éléments peut avoir une valeur, par exemple une valeur de 1 à 9; la valeur 0 peut correspondre à une valeur par défaut en l'absence d'indication particulière.

On obtient ainsi, avec quelques octets (si on ne stocke pas les codes des éléments morphologiques mais seulement leurs valeurs le nombre d'octets est particulièrement réduit) une description morphologique précise; les combinaisons sont très nombreuses et permettent une bonne description d'un individu. La représentation sur un écran permet de comparer l'image reproduite au visage du titulaire qui présente la carte; elle permet aussi de comparer l'image affichée sur écran à la photographie du titulaire (lorsqu'elle est présente sur la carte) pour détecter une divergence entre les indications de la carte et la photographie attachée à la carte.

La station de contrôle peut par ailleurs afficher sur l'écran, sans les représenter par un dessin, des indications supplémentaires, lues dans la carte : par exemple la taille du titulaire, sa corpulence, etc.

La carte peut être plus ou moins sécurisée, c'est-à-dire que son utilisation peut être soumise à l'introduction préalable au clavier d'un code d'accès confidentiel. D'autre part, dans une version encore plus sécurisée, les échanges entre la carte et l'extérieur sont cryptés pour qu'il ne soit pas possible de lire directement les indications contenues dans la carte. Pour ces cas là, la carte est une carte à microprocesseur et non pas une simple carte à mémoire.

## Revendications

1. Système de contrôle comprenant au moins une carte à puce (20), destinée à être conservée par un titulaire, et une station de contrôle (10 à 16), la carte à puce comportant une mémoire pour stocker un petit nombre de codes très simples, chaque code étant représentatif d'un caractère morphologique du titulaire, la station de contrôle comportant un lecteur de carte (12), un moyen d'affichage (16), et des moyens (PP) pour lire des codes dans la carte et pour afficher une image schématique (18) d'une partie du corps du titulaire, ladite image étant un portrait robot composé de caractères morphologiques correspondant aux codes lus dans la carte, caractérisé en ce que la station de contrôle comporte un sous-programme de dessin pour chaque caractère morphologique à représenter schématiquement.

2. Système selon la revendication 1, caractérisé en ce que la dite représentation de certains caractères morphologiques consiste en une modification d'un dessin déjà affiché par un caractère précédent, ledit caractère précédent pouvant avoir donné lieu à un premier sous-programme de dessin.

3. Système selon l'une des revendications 1 à 2, caractérisé en ce que la station de contrôle comporte un sous-programme de conversion de codes en des expressions littérales explicites.

4. Système selon l'une des revendications 1 à 3, caractérisé en ce que la station de contrôle comporte un logiciel apte à établir une image schématique combinant les différents caractères morphologiques correspondant aux différents codes lus dans la carte.

5. Système selon l'une des revendications 1 à 4, caractérisé en ce qu'une photographie de titulaire de la carte est présente sur une face de la carte afin de pouvoir disposer simultanément de cette photographie et de la représentation visuelle du visage schématisé, en présence du titulaire.

## Patentansprüche

1. Kontrollsystem, umfassend mindestens eine Chipkarte (20), die dafür bestimmt ist von einem Inhaber aufbewahrt zu werden, und eine Kontrollstation (10 - 16), wobei die Chipkarte einen Speicher umfaßt, um eine kleine Zahl von sehr einfachen Codes zu speichern, und jeder Code repräsentativ ist für ein morphologisches Charakteristikum des Inhabers, und wobei die Kontrollstation einen Kartenleser (12) umfasst, ein Anzeigemittel (16), und Mittel (PP) zum Lesen der Codes auf der Karte und zum Anzeigen eines schematischen Bildes (18) eines Teils des Körpers des Inhabers, wobei das Bild ein Phantombild ist, das aus den morphologischen Charakteristiken aufgebaut ist, die den von der Karte gelesenen Codes entsprechen, dadurch gekennzeichnet, dass die Kontrollstation ein Zeichnungs-Unterprogramm für jedes schematisch darzustellende morphologische Charakteristikum umfasst.

2. System nach Anspruch 1, dadurch gekennzeichnet, dass die Darstellung bestimmter morphologischer Charakteristiken in einer Modifikation einer Zeichnung besteht, die durch ein vorangegangenen Charakteristikum bereits angezeigt wurde, wobei das vorangegangene Charakteristikum ein erstes Zeichnungs-Unterprogramm ausgelöst haben könnte.

3. System nach Anspruch 1 oder 2, dadurch gekennzeichnet, dass die Kontrollstation ein Unterprogramm zur Umwandlung von Codes in ausdrückliche Textausdrücke umfasst.

4. System nach einem der Ansprüche 1 bis 3, dadurch gekennzeichnet, dass die Kontrollstation eine Software umfasst, die dazu geeignet ist, ein schematisches Bild zu schaffen, das die unterschiedlichen morphologischen Charakteristiken kombiniert, welche den unterschiedlichen Codes entsprechen, die auf der Karte gelesen wurden.

5. System nach einem der Ansprüche 1 bis 4, dadurch gekennzeichnet, dass eine Fotografie des Inhabers der Karte auf einer Seite der Karte vorhanden ist, um in der Gegenwart des Inhabers gleichzeitig über diese Fotografie und über die schematische visuelle Darstellung des Gesichtes zu verfügen.

## Claims

1. Checking system comprising at least one smart card with a chip (20), designed to be kept by a holder, and a checking station (10 to 16), the smart card with the chip comprising a memory for storing a small number of very simple codes, each code being representative of a morphological characteristic of the holder, the checking station comprising a card reader (12), a means of display (16), and means (PP) for reading codes in the card and for displaying a diagrammatic image (18) of a part of the body of the holder, said image being a robot portrait composed of morphological characteristics corresponding to the codes read in the card, characterised in that the checking station comprises a drawing sub-programme for each morphological characteristic to be represented diagrammatically.

2. System according to claim 1, characterised in that said representation of certain morphological characteristics consists of a modification of a drawing already displayed by a preceding characteristic, said preceding characteristic possibly having given rise to a first drawing sub-programme.

3. System according to one of claims 1 to 2, characterised in that the checking station comprises a sub-programme for converting codes into explicit literal expressions.

4. System according to one of claims 1 to 3, characterised in that the checking station comprises software suitable for building up a diagrammatic image combining the different morphological characteristics corresponding to the different codes read in the card.

5. System according to one of claims 1 to 4, characterised in that a photograph of the holder of the card is present on one face of the card so that this photograph and the visual representation of the diagrammatic face are available simultaneously in the presence of the holder.
